# EUROPÄISCHE PATENTSCHRIFT

(11) **EP 3 449 728 B1**
(45) Veröffentlichungstag und Bekanntmachung des Hinweises auf die Patenterteilung: **06.12.2023**
(21) Anmeldenummer: 18191946.5
(22) Anmeldetag: 31.08.2018
(51) Int. Cl.: A22C 11/02

(54) **VORRICHTUNG ZUM FÜLLEN SCHLAUCHFÖRMIGER HÜLLEN**
DEVICE FOR FILLING TUBULAR CASINGS
DISPOSITIF DE REMPLISSAGE D'ENVELOPPES TUBULAIRES

(30) Priorität: 31.08.2017 DE 102017120108
(43) Veröffentlichungstag der Anmeldung: 06.03.2019
(73) Patentinhaber: VEMAG Maschinenbau GmbH, 27283 Verden/Aller (DE)
(72) Erfinder: MACH, Matthias, 30539 Hannover (DE); HAGEDORN, Jan-Nils, 27283 Verden (DE); MATTHIES, Heiner, 27419 Kalbe (DE); GROTE, Olaf, 27324 Eystrup (DE); LEWIN, Alexander, 27283 Verden (DE)
(74) Vertreter: Eisenführ Speiser

(56) Entgegenhaltungen:
- EP-A2- 0 568 372
- EP-A2- 2 384 634
- DE-U1-202013 010 285
- US-A- 4 437 209

## Beschreibung

Die vorliegende Erfindung bezieht sich auf eine Vorrichtung zum Füllen von schlauchförmigen Hüllen, mit einer pastösen Masse, insbesondere von Darmraupen mit Wurstbrät, mit zumindest einem Füllrohr, auf das eine mit einer Masse befüllbare Hülle aufziehbar ist, einem ein erstes Ende des Füllrohres aufnehmenden Aufnahmeteil, einer Darmbremseinheit, welche dem gegenüberliegenden zweiten, offenen Ende zugeordnet und mit der über das Füllrohr gezogenen Hülle in Wirkverbindung bringbar ist, und einer am Aufnahmeteil angeordneten Stützeinrichtung für das Füllrohr. Die Erfindung betrifft des Weiteren eine Stützeinrichtung für zumindest ein Füllrohr einer Vorrichtung zum Füllen von schlauchförmigen Hüllen mit pastöser Masse, insbesondere von Darmraupen mit Wurstbrät. Ferner betrifft die Erfindung auch eine Füllmaschine zum Herstellen von Würsten aus pastöser Masse, insbesondere aus Wurstbrät, mit einem Fülltrichter zum Aufnehmen der pastösen Masse, einer Förderpumpe zum Fördern der pastösen Masse und einer Vorrichtung zum Füllen von schlauchförmigen Hüllen mit pastöser Masse.

Vorrichtungen zum Füllen von schlauchförmigen Hüllen werden üblicherweise an Füllmaschinen zum Herstellen von Wurststrängen verwendet, mittels derer eine pastöse Masse, wie Wurstbrät oder dergleichen, in schlauchförmige Hüllen eingegeben oder eingefüllt wird. Das Einfüllen der pastösen Masse in die schlauchförmige Hülle kann kontinuierlich oder portionsweise erfolgen, sodass die pastöse Masse fortwährend oder taktweise in die schlauchförmige Hülle eingegeben wird. Als schlauchförmige Hülle kann ein Kunstdarm oder ein Naturdarm verwendet werden. Unter einer pastösen Masse ist vorliegend eine Lebensmittelmasse zu verstehen, die fließfähig ist und über eine rohrförmige Leitung transportiert werden kann. Als pastöse Masse ist z.B. neben einer Fleisch- oder Wurstmasse auch eine Teigmasse zu verstehen.

Während des Füllvorganges der schlauchförmigen Hülle wird die bereits befüllte Hülle in vorbestimmten Abständen abgeteilt bzw. abgedreht, sodass zwischen den jeweils befüllten Hüllenabschnitten Trennstellen generiert sind. Die befüllte Hülle weist somit voneinander separierte Strangabschnitte auf, welche insbesondere ein gleiches Gewicht und bevorzugt eine gleiche Länge haben. Die voneinander unterteilten Strangabschnitte werden anschließend üblicherweise voneinander getrennt, wodurch vereinzelte Strangabschnitte entstehen, die als Würste bezeichnet werden und beispielsweise einer Verpackungsmaschine zur Weiterverarbeitung zugeführt werden.

Um die schlauchförmige Hülle befüllen zu können, ist diese zuvor auf einem Füllrohr einer Füllvorrichtung aufzuziehen, wobei die schlauchförmige Hülle insbesondere gerafft ist, sodass die geraffte Hülle, bei der es sich vornehmlich um einen Kunstdarm handelt, im folgenden auch als Darmraupe bezeichnet, kürzer als das Füllrohr ist. Die gerafften Hüllen können unterschiedliche Durchmesser, auch Kaliber genannt, haben. Mit Hilfe einer Fördereinrichtung, welche insbesondere der Füllvorrichtung vorgeschaltet ist, wird die pastöse Masse durch das Füllrohr in die endseitig geschlossene schlauchförmige Hülle gepresst. Durch das Einleiten der Masse in die Hülle wird diese allmählich vom offenen Ende des Füllrohres heruntergezogen und dann das Füllrohr, welches beispielsweise dreh- und antreibbar ist, mitsamt der noch darauf befindlichen Hülle um seine Längsachse zum Erzeugen der Abdrehstelle gedreht.

Zum Bestücken eines Füllrohres mit einer neuen schlauchförmigen Hülle, was unter Verwendung einer Darmgreifvorrichtung bzw. einer Darm-Beladeeinheit erfolgt, ist das leere Füllrohr in eine Beladeposition zu verschwenken. Ein mit einer gerafften Hülle bestücktes Füllrohr ist wiederum in eine Befüllposition zu bewegen. Beim Verschwenken des leeren wie auch bestückten Füllrohres kann dieses leicht in Schwingung geraten, sodass das Bestücken mit einer neuen gerafften Hülle durch eine Darmgreifvorrichtung bzw. Darm-Beladeeinheit oder ein in Kontaktbringen der bereits bestückten Hülle mit einer Darmbremseinheit erschwert ist.

Eine solche Darmbremseinheit hält die Hülle beim Befüllen mit der pastösen Masse straff, was dadurch erfolgt, dass das Füllrohr mit der Hülle mit seinem freien Ende in die Darmbremseinheit einfährt. Ist das freie Ende des Füllrohres dann nicht zentrisch zur Darmbremseinheit, kann das vordere Ende der Hülle abknicken oder es zu Schäden an den Füllrohren kommen.

Aus DE 20 2013 010 285 ist eine Vorrichtung zum Füllen schlauchförmiger Hüllen vorbezeichneter Gattung bekannt, welche eine am Aufnahmeteil angeordnete Stützeinrichtung für das Füllrohr aufweist, welche mit einem entlang des Füllrohres verfahrbaren Darmmitnahmering gekoppelt ist, der mit dem offenen Ende der gerafften Hülle in Kontakt steht. Die aus DE 20 2013 010 285 bekannte Stützeinrichtung bewirkt jedoch nur eine ausreichende Stützwirkung, wenn der Darmmitnahmering nahe dem offenen Ende des Füllrohres angeordnet ist. Das ist jedoch nur der Fall, wenn das Füllrohr nicht mit einer Hülle bestückt ist. Ist das Füllrohr jedoch mit einer gerafften Hülle, auch bezeichnet als Darmraupe, bestückt, ist der Darmmitnahmering in einer Position nahe dem Aufnahmeteil für das Füllrohr. Dadurch ist das offene Ende des Füllrohrs in bestücktem Zustand nahezu freischwingend. Beim Inkontaktbringen des freien bestückten Endes des Füllrohres mit einer Darmbremseinheit kann es aufgrund des Nichtfluchtens von Darmbremseinheit und Füllrohr oder aufgrund des Abknickens der gerafften Hülle zu einem ungewollten Kontakt beider Bauteile kommen.

Vor diesem Hintergrund liegt der vorliegenden Erfindung die Aufgabe zugrunde, eine Vorrichtung zum Füllen schlauchförmiger Hüllen der vorbezeichneten Art sowie eine Stützeinrichtung für ein Füllrohr und eine Füllmaschine zum Herstellen von Würstchen dahingehend aufzuzeigen, bei denen unabhängig davon, ob das Füllrohr bestückt oder unbestückt ist, die Stützwirkung am Füllrohr verbessert ist, sodass eine erhöhte Prozesssicherheit während des Betriebes der Füllvorrichtung erreicht ist.

Die Erfindung löst die ihr zugrundeliegende Aufgabe bei einer Vorrichtung zum Füllen von schlauchförmigen Hüllen der vorbezeichneten Art durch die Merkmale des Gegenstands von Anspruch 1. Insbesondere weist die Stützeinrichtung wenigstens ein im Abstand zum Aufnahmeteil veränderliches Stützteil auf, welches dazu eingerichtet ist, mit einer gerafften Hülle auf dem Füllrohr zur Aufnahme von Querkräften in Kontakt gebracht zu werden wobei das Stützteil das vordere Ende der Hülle und damit das mit der gerafften Hülle bestückte Füllrohr am freien Ende während des Verschwenkens seitlich stützt.

Der Erfindung liegt die Erkenntnis zugrunde, dass mit Hilfe eines an der Stützeinrichtung angeordneten Stützteiles, das im Abstand zum Aufnahmeteil veränderlich ist und welches mit einer auf dem Füllrohr gerafften Hülle, insbesondere deren Außenumfang in Kontakt bringbar ist, das Füllrohr am freien Ende während seiner Schwenkbewegung seitlich gestützt wird, wenn das Füllrohr mit einer gerafften Hülle bestückt ist und somit auf das Füllrohr eine zusätzliche Last wirkt. Bevorzugt ist das an der Außenseite der Hülle anliegenden Stützteil im Abstand zum Aufnahmeteil veränderlich dergestalt, dass, wenn das mit einer gerafften Hülle bestückte Füllrohr an seinem freien Ende mit der Darmbremseinheit in Kontakt gebracht wird, das Stützteil durch das Inkontaktbringen mit der Darmbremseinheit entlang des Füllrohres bewegbar ist. Das in Kontakt bringen der Darmbremseinheit mit dem Füllrohr erfolgt durch eine Relativbewegung der beiden Bauteile zueinander, wobei mindestens eines der Bauteile bewegt wird. Neben einer Stützfunktion während des Verschwenkens des Füllrohres hat das Stützteil gleichzeitig auch die Funktion einer Zentriereinrichtung. Das Stützteil ist bevorzugt dem freien Ende zugeordnet und dazu eingerichtet, das offene bzw. freie Ende des bestückten Füllrohres zu der dann mit dem Füllrohr in Kontakt zu bringenden Darmbremseinheit auszurichten. Das Füllrohr ist gemäß einer bevorzugten Ausführungsform um seine Längsachse dreh- und antreibbar und damit drehbeweglich am Abdrehkopf aufgenommen. In einer anderen Ausführungsform ist das Füllrohr feststehend.

Vorzugsweise weist das Stützteil wenigstens eine die Hülle auf dem Füllrohr zumindest partiell umgebende Stützfläche auf. Mit der Stützfläche des Stützteiles wird insbesondere einer seitlichen Auslenkung des Füllrohres entgegengewirkt. Die seitliche Auslenkung wird mit dem erfindungsgemäßen Stützteil nicht gänzlich verhindert, jedoch insoweit beschränkt, dass das freie Ende des Füllrohres nur soweit seitlich ausgelenkt werden kann, dass an diesem eine ausschließlich elastische Verformung entsteht. Dabei ist zwischen der Stützfläche, welche bevorzugt nahezu spaltfrei an der Außenseite der gerafften Hülle anliegt, und der Außenseite des Füllrohres die Wandung der gerafften Hülle angeordnet.

Gemäß einer bevorzugten Weiterbildung der erfindungsgemäßen Vorrichtung weist das Stützteil eine mit dem Außenumfang eines entlang des Füllrohres verfahrbaren Darmmitnahmeringes bereichsweise in Kontakt bringbare Stützfläche auf. Das Stützteil ist somit dazu eingerichtet ist, mit einem dem freien Ende des Füllrohres angenäherten Darmmitnahmering zur Aufnahme von Querkräften in Kontakt gebracht zu werden. Mit Hilfe des Stützteils, das mit dem Darmmitnahmering in Kontakt bringbar ist, wird das Füllrohr insbesondere dann seitlich gestützt, wenn die geraffte Hülle vom Füllrohr nach dem erfolgten Befüllen der Hülle abgezogen wurde. Der entlang des Füllrohres verfahrbare Darmmitnahmering fährt dabei in einer bevorzugten Ausführungsform der Erfindung in einen Abschnitt des eine Stützfläche aufweisenden Bereiches des Stützteiles ein. Auch hier wird vorzugsweise eine nahezu spielfreie Verbindung zwischen dem Darmmitnahmering am Füllrohr und der Stützfläche am Stützteil erzeugt. Mit dem Einfahren des Darmmitnahmeringes in zumindest einen Abschnitt des Stützteiles ist bewirkt, dass der Darmmitnahmering bis zum offenen bzw. freien Ende des Füllrohres verfahren werden kann. Vorzugsweise bewegt sich das Stützteil am freien Ende des Füllrohres über etwa ein Viertel oder Fünftel der Länge des Füllrohres.

In einer bevorzugten Ausführungsform bilden die Stützflächen jeweils einen Aufnahmeraum, vorzugsweise einen zylindrischen Aufnahmeraum für die geraffte Hülle und den entlang des Füllrohres verfahrbaren Darmmitnahmering aus. Das Stützteil weist somit bevorzugt sowohl die Hülle als auch den Darmmitnahmering vollumfänglich umgebende Stützflächen auf, wodurch eine Auslenkung des Füllrohres in jede beliebige seitliche Richtung vorzugsweise senkrecht zur Längsachse des Füllrohres sicher aufgenommen werden kann.

In einer Ausführungsform der Erfindung weisen die Stützflächen ein oder mehrere in Längsrichtung des Füllrohres, insbesondere parallel zur Erstreckungsrichtung des Füllrohres verlaufende Schlitze auf. Bevorzugt ist ein zylindrischer Aufnahmeraum für die geraffte Hülle und ein zylindrischer Aufnahmeraum für den Darmmitnahmering am Stützteil ausgebildet, welche bevorzugt unterschiedliche Durchmesser haben. Die Aufnahmeräume weisen einen axialen Versatz zueinander auf, wobei die Längsachsen der Aufnahmeräume koaxial angeordnet sind.

Gemäß einer bevorzugten Weiterbildung der erfindungsgemäßen Vorrichtung ist das Stützteil eine Stützhülse mit einer oder mehreren Stützflächen für die geraffte Hülle und/oder den Darmmitnahmering. Mit der Ausgestaltung des Stützteiles als Stützhülse ist eine konstruktiv einfache Möglichkeit für das dauerhaft seitliche Abstützen des Füllrohres insbesondere während des Verschwenkens des leeren oder bestückten Füllrohres an der Füllvorrichtung bewirkt. Die Stützhülse umgibt das Füllrohr dabei unabhängig davon, ob das Füllrohr mit einer gerafften Hülle bestückt ist oder ob das Füllrohr, aufgrund eines unmittelbar zuvor beendeten Füllvorganges, leer ist. Die Stützhülse ist derart ausgebildet und dazu eingerichtet, dass das Füllrohr über den darauf aufgezogenen Hüllenabschnitt abgestützt oder zentriert oder über einen entlang des Füllrohres verfahrbaren Darmmitnahmering in einer entsprechend geradlinigen Ausrichtung zu seinem am Aufnahmeteil vorzugsweise drehbeweglich aufgenommenen Ende gehalten wird. Um das Bestücken des Füllrohres mit einer gerafften Hülle oder Darmraupe bzw. das Inkontaktbringen des offenen Endes des bestückten Füllrohres mit der Darmbremseinheit nicht zu behindern, ist das Stützteil entlang des Füllrohres beweglich ausgebildet. Bevorzugt weist das Stützteil jedoch keinen eigenen Antrieb zum Bewegen des Stützteiles entlang des Füllrohres auf.

In einer bevorzugten Ausführungsform der Erfindung weist das Stützteil einen Zentrierabschnitt für den im Aufnahmeraum abschnittsweise aufnehmbaren Darmmitnahmering auf. Über den Zentrierabschnitt ist insbesondere beim Einfahren des Darmmitnahmeringes in den Aufnahmeraum des als Stützhülse ausgebildeten Stützteiles am Ende des Befüllvorganges vermieden, dass bei einem nicht exakt zur Stützhülse ausgerichteten Füllrohr ein entlang des Füllrohres bewegter Darmmitnahmering gegen eine Stirnfläche des als Stützhülse ausgebildeten Stützteiles fährt. Vorzugsweise weist der Zentrierabschnitt einen sich in Richtung des freien Endes des Füllrohres konisch verjüngenden Einfahrabschnitt auf, der dann in den Aufnahmeraum mit konstantem Durchmesser für den Darmmitnahmering übergeht. In einer bevorzugten Ausführungsform der Erfindung weist der Darmmitnahmering eine mit dem Zentrierabschnitt am Stützteil korrespondierende Anlauffläche auf, welche vorzugsweise ebenfalls konisch bzw. kegelförmig ausgebildet ist.

In einer Weiterbildung der erfindungsgemäßen Vorrichtung weist das Stützteil einen Führungsschlitten auf, welcher entlang einer parallel zur Längsachse des Füllrohres verlaufenden Führung der Stützeinrichtung beweglich ist. Mit dem Einsatz eines Führungsschlittens lässt sich das Stützteil vorzugsweise entlang des Füllrohres geführt bewegen, wobei der Führungsschlitten entlang der Führung der Stützeinrichtung vorzugsweise schiebebeweglich aufgenommen ist. Der Abstand des Stützteiles zum Ende des Füllrohres ist damit auf einfache Weise variabel bzw. verstellbar, und gleichzeitig gewährleistet der Führungsschlitten eine exakte Ausrichtung des Stützteiles zur Längsachse des bevorzugt dreh- und antreibbar am Aufnahmeteil der Vorrichtung gehaltenen Füllrohres. Der Führungsschlitten und die den Führungsschlitten aufnehmende Führung der Stützeinrichtung sind vorzugsweise über ein Gleit- oder Rollenlager einander gelagert. Die Führung nimmt den Führungsschlitten zusammen mit dem Stützteil bevorzugt drehfest auf. In einer Ausgestaltung der Erfindung wird die Position des verschieblich aufgenommenen Stützteiles in Abhängigkeit von zum Beispiel einer mit dem freien Ende in Kontakt bringbaren Darmbremseinheit oder einer Darm-Beladeeinheit angepasst.

Vorzugsweise ist am Stützteil ein Mitnehmer angeordnet, mittels dem das Stützteil gezielt entlang des Füllrohres bewegbar ist. Aufgrund dessen das entlang des Füllrohres bewegbare Stützteil keinen eigenen Antrieb für eine Verstellbewegung in Längsrichtung aufweist, erfolgt die Bewegung des Stützteiles durch andere, angetriebene Komponente der Vorrichtung. Der Mitnehmer kann insbesondere ein am Stützteil oder am Führungsschlitten des Stützteiles ausgebildeter Materialvorsprung sein, der beispielsweise mit einem Anschlagteil an einer das Stützteil bewegenden Komponente der erfindungsgemäßen Vorrichtung angreift bzw. mit dieser korrespondiert.

Gemäß einer bevorzugten Weiterbildung der Erfindung ist der Mitnehmer für eine Bewegung des Stützteiles entlang des Füllrohres mit einem Abschnitt der Darmbremseinheit oder einer Darm-Beladeeinheit koppelbar. Insbesondere die mit dem Füllrohr in Kontakt bzw. in Wirkverbindung bringbare Komponente der erfindungsgemäßen Füllvorrichtung weist vorzugsweise ein mit dem Mitnehmer korrespondierendes Anschlagteil auf, welches das Stützteil in eine entsprechend an der Vorrichtung benötigte Position bewegt. Der Mitnehmer am Stützteil ist derart ausgebildet, dass das Stützteil in beide Richtungen entlang des Füllrohres an der Stützeinrichtung durch zumindest eine der Komponenten, nämlich der Darmbremseinheit oder der Darm-Beladeeinheit bewegbar ausgebildet ist. Das Bewegen bzw. Verstellen des Stützteiles erfolgt somit jeweils gezielt über die eine eigene Antriebseinrichtung aufweisende Komponente der Füllvorrichtung, nämlich der Darmbremseinheit oder der Darm-Beladeeinheit, sodass das Stützteil erfindungsgemäß keinen eigenen Antrieb benötigt. In einer weiteren Ausführungsform der Erfindung sind Darm-Beladeeinheit und Darmbremseinheit feststehend ausgebildet. Das axiale Bewegen des Füllrohres und das Ansteuern des das Stützteil bewegenden Mitnehmers erfolgen über das als Abdrehkopf ausgebildete Aufnahmeteil, das in Längsrichtung der Füllrohre bewegt wird.

Gemäß einer bevorzugten Ausgestaltung der Erfindung ist das Stützteil dazu eingerichtet, bevor oder während des Aufziehens der schlauchförmigen Hülle auf das Füllrohr, vorzugsweise mittels einer Darm-Beladeeinheit, in Richtung des Aufnahmeteils bewegt zu werden. Damit ist gewährleistet, dass das Stützteil das Aufziehen bzw. Bestücken des Füllrohres während des Beladevorganges mit einer neuen gerafften Hülle oder Darmraupe nicht behindert. Die Darm-Beladeeinheit weist zu diesem Zweck ein Stellglied auf, das gegen den Mitnehmer am Stützteil einwirkt und insbesondere einen Führungsschlitten des Stützteiles entlang der Führung an der Stützeinrichtung in einer vorbestimmten Winkelausrichtung in Längsrichtung der Führung an der Stützeinrichtung verschiebt.

Bei der erfindungsgemäßen Füllvorrichtung ist vorgesehen, dass das Stützteil während des Füllens der schlauchförmigen Hülle und/oder während des Verschwenkens des Füllrohres im Bereich des offenen Endes des Füllrohres angeordnet ist. Das Stützteil stützt damit insbesondere immer dann das offene Ende des Füllrohres sowie das vordere Ende einer bereits auf das Füllrohr aufgezogenen Darmraupe ab, wenn Querkräfte bzw. Kräfte seitlich auf das Füllrohr einwirken, beispielsweise während des Verschwenkens des Füllrohres über das Aufnahmeteil, oder beim Inkontaktbringen des Füllrohres mit der Darmbremseinheit und dem sich daran anschließenden Befüllen der schlauchförmigen Hülle. Beim Inkontaktbringen des freien Endes des Füllrohres mit der Darmbremseinheit stützt sich das Füllrohr über die auf dem Füllrohr aufgezogene geraffte Hülle bzw. Darmraupe an der Stützfläche des Stützteiles ab. In einem weiteren Ausführungsbeispiel stützt sich hingegen das leere Füllrohr gegenüber dem Stützteil während des Verschwenkens des Füllrohres mittels des dem freien Ende des Füllrohres angenäherten Darmmitnahmeringes ab. Der Darmmitnahmering füllt anstelle der dann bereits vollständig vom Füllrohr abgezogenen Hülle den freien Raum zwischen der Stützfläche am Stützteil und dem Füllrohr aus.

Gemäß einer bevorzugten Ausführungsform ist dem Stützteil ein Rücksteller zugeordnet, der dazu eingerichtet ist, das Stützteil nach dem Aufziehen der Hülle auf das Füllrohr in eine vorbestimmte Position entlang des Füllrohres zu bewegen. Insbesondere nach dem Zurückbewegen der Darm-Beladeeinheit und dem Wegfall der damit auf das Stützteil einwirkenden Verstellbewegung durch die Darm-Beladeeinheit ist eine selbsttätige Rückbewegung des Stützteiles in eine vorbestimmte Position am Füllrohr bewirkt. Mittels des Rückstellers wird das Stützteil vorzugsweise nahe des zweiten, freien Endes am Füllrohr bewegt. Aus dieser Stellung wird das Stützteil im Bedarfsfall aus seiner vorderen Position durch die Darmbremseinheit oder die Darm-Beladeeinheit heraus bewegt. In einer anderen Ausgestaltung wird das Stützteil über den Darmmitnahmering in Richtung des freien Endes des Füllrohrs bewegt.

Der Rücksteller ist in einer bevorzugten Ausführungsform der Erfindung ein mit der Führung und dem Führungsschlitten des Stützteiles gekoppeltes Federelement, was eine konstruktiv einfache Ausgestaltung zur Ausbildung eines Rückstellers ermöglicht. Mit Bewegen des Stützteiles aus einer durch den Rücksteller resultierenden Neutralstellung heraus wird eine Rückstellkraft am Federelement erzeugt, die umso größer wird, je weiter das Stützteil aus seiner Neutralstellung heraus bewegt wird.

Vorzugsweise ist das Stützteil mit einem an das Kaliber der zu verarbeitenden Hülle im Innendurchmesser angepassten Einsatz ausrüstbar. Darüber ist gewährleistet, dass die Stützfläche für die auf das Füllrohr aufgezogene Hülle auf einfache Weise angepasst werden kann, ohne das komplette Stützteil an der Vorrichtung austauschen zu müssen. Der am Stützteil austauschbare Einsatz ist hülsenartig ausgebildet und erstreckt sich insbesondere über einen Abschnitt entlang des Innendurchmessers eines bevorzugt als Stützhülse ausgebildeten Stützteiles. In einer Ausführungsform der Erfindung weist der hülsenartige Einsatz an seinem äußeren Umfang radial nach außen stehende Vorsprünge auf. Diese greifen beispielsweise in an der Innenseite des Stützteiles ausgebildete Ausnehmungen ein, wodurch eine Arretierung in axialer Richtung und in Umfangsrichtung des Stützteiles erfolgt.

Eine bevorzugte Ausführungsform der Erfindung sieht vor, dass jede Führung ein oder mehrere am Aufnahmeteil feststehend angeordnete Führungsstreben aufweist. Entlang der Führungsstreben ist insbesondere der Führungsschlitten des Stützteiles geführt. In einer möglichen Ausführungsform sind zwei Führungsstreben als Führung für den Führungsschlitten des Stützteiles vorgesehen, wodurch eine selbsttätige Ausrichtung des am Führungsschlitten angeordneten Stützteiles bezogen auf seine radiale Ausrichtung zum Füllrohr an der Füllvorrichtung gegeben ist. Vorzugsweise weist die Führungsstrebe bzw. weisen die Führungsstreben einen zylindrischen Querschnitt auf, wobei die mindestens eine Führungsstrebe sich bevorzugt über mindestens zwei Drittel der Gesamtlänge des Füllrohres, bevorzugt über mehr als drei Viertel der Gesamtlänge des Füllrohres erstreckt, sodass das Stützteil nahezu jeden Abschnitt des jeweiligen Füllrohres abstützen kann.

Vorzugsweise sind am Aufnahmeteil mehrere Füllrohre angeordnet, wobei jedes Füllrohr über ein im Abstand zum Aufnahmeteil und damit zum gelagerten Ende des Füllrohres angeordnetes Stützteil gelagert ist. Mit der Verwendung mehrerer Füllrohre, welche vorzugsweise um ihre Längsachse dreh- und antreibbar sind, ist ein, bezogen auf die Wirtschaftlichkeit, verbesserter Füllvorgang an der erfindungsgemäß ausgebildeten Füllvorrichtung erreicht. In dem Moment, wo an einem Füllrohr eine neue schlauchförmige Hülle aufgezogen beziehungsweise aufgeschoben wird, kann an dem jeweils anderen Füllrohr der Füllvorgang, der darauf aufgezogenen Hülle umgesetzt werden. Bevorzugt weist die Füllvorrichtung am Aufnahmeteil zwei oder drei Füllrohre auf. Durch den Einsatz eines bevorzugt entlang eines jeweiligen Füllrohres beweglichen Stützteiles an jedem der Füllrohre ist durch den zweiten vorzugsweise als Loslager ausgebildeten Lagerpunkt für die Füllrohre gewährleistet, dass keines der am Aufnahmeteil antreibbar gelagerten Füllrohre beim Aufziehen einer neuen schlauchförmigen Hülle oder beim in Kontakt bringen mit der Darmbremseinheit quer zur Längsrichtung verbogen wird. Zudem werden die mit der Stützeinrichtung stabilisierten Füllrohre beispielsweise positionsgenau zur Darmgreifvorrichtung oder der Darmbremseinheit gehalten, was das Aufschieben beziehungsweise Aufziehen einer neuen schlauchförmigen Hülle und/oder dass in Kontakt bringen des offenen Endes eines jeweiligen Füllrohres mit der Darmbremseinheit vereinfacht.

Gemäß einer bevorzugten Ausführungsform der Erfindung weist das Aufnahmeteil eine Schwenkplatte auf, die beweglich an der Vorrichtung gehalten und an der das Füllrohr vorzugsweise waagerecht abstehend angeordnet ist. Mit der beweglichen Aufnahme der Schwenkplatte an der Vorrichtung, ist es auf einfach Weise möglich, das Füllrohr, an dem eine neuen schlauchförmige Hülle aufzuziehen ist, aus seiner Befüllposition an der erfindungsgemäßen Füllvorrichtung heraus zu bewegen, in der üblicherweise der Füllvorgang der schlauchförmigen Hülle vorgenommen wird. Damit ist eine verbesserte Bewegungsfreiheit für beispielsweise eine zum Aufziehen der schlauchförmigen Hülle auf das jeweilige Füllrohr umsetzende Darm-Beladeeinheit geschaffen. Vorzugsweise weist die Schwenkplatte eine Plattenebene auf, an der das Füllrohr bevorzugt senkrecht absteht. Damit ist eine konstruktiv einfache Lagerung des Füllrohres mit seinem am Aufnahmeteil drehbeweglich gehaltenen Ende geschaffen.

Bevorzugt ist das Aufnahmeteil als Abdrehkopf ausgebildet, der eine Drehachse hat, die jeweils parallel zur Drehachse des Füllrohres ausgerichtet ist. Durch die parallel zur Drehachse des Füllrohres verlaufende Drehachse des Abdrehkopfes, ist eine konstruktiv einfach umzusetzende Schwenkbewegung des Füllrohres an der Füllvorrichtung erreicht. Durch eine einfache Drehbewegung des Abdrehkopfes um dessen Rotationsachse kann ein jeweils neu zu bestückendes Füllrohr aus seiner Befüllposition bewegt werden. Die Befüllposition ist die Stellung des Füllrohres an der Füllvorrichtung, in der das Füllrohr während des Befüllvorganges mit der Darmbremseinheit in Kontakt gebracht ist. Das Füllrohr wird in eine Position überführt, in der eine ausreichenende Bewegungsfreiheit für die das Füllrohr mit der schlauchförmigen Hülle bestückende Darm-Beladeeinheit vorhanden ist. Die Schwenkplatte des Abdrehkopfes weist vorzugsweise eine Kreisform auf, an der mindestens ein Füllrohr angeordnet, vorzugsweise zwei oder mehr Füllrohre gleichmäßig beabstandet und zudem symmetrisch zur Drehachse der Schwenkplatte angeordnet sind. Während des Schwenkvorganges der Schwenkplatte mit den daran angeordneten, dreh- und antreibbaren Füllrohren ist somit eine gleichmäßige Kräfteverteilung bewirkt. Mit Hilfe der die Füllrohre zusätzlich abstützenden Stützteile kann die Schwenkbewegung mit einer hohen Geschwindigkeit durchgeführt werden, ohne das Risiko, dass die Füllrohre derart in Schwingungen versetzt werden, dass bleibende Verformungen an den Füllrohren entstehen und/oder die gerafften schlauchförmigen Hülle abknicken.

Nach einer anderen Weiterbildung der Erfindung weist die Stützeinrichtung vorzugsweise eine koaxial zur Drehachse der Schwenkplatte angeordnete Zentralstrebe auf, an der die Führungsstreben einer jeweiligen Führung parallel verlaufend angeordnet sind. Mit dem Einsatz einer Zentralstrebe und den parallel dazu verlaufenden Führungsstreben ist eine feste, rahmenartige Struktur der Stützeinrichtung für die am Aufnahmeteil der Vorrichtung angeordneten Füllrohre geschaffen, welche gleichzeitig eine hohe strukturelle Festigkeit aufweist. Damit ist eine exakte Ausrichtung der Füllrohre zum Aufnahmeteil bewirkt. Die Führungsstreben einer jeweiligen Führung sind parallel zur Zentralstrebe der Stützeinrichtung ausgerichtet, wodurch die beweglich aufgenommen Stützteile präzise geführt und eine exakte Zentrierung der sonst nur an einem Ende dreh- und antreibbar aufgenommen Füllrohre möglich ist. Gemäß einer bevorzugten Ausgestaltung der Erfindung sind die freien Enden der Führungsstreben über einen Verbindungsflansch mit der Zentralstrebe gekoppelt.

Bevorzugt ist am freien Ende der Zentralstrebe ein abschnittsweise entlang der Zentralstrebe bewegliches Führungsteil der Darmbremseinheit angeordnet. Über das an der Zentralstrebe angreifende Führungsteil ist eine Kopplung zwischen der Stützeinrichtung und der Darmbremseinheit geschaffen, wodurch eine bevorzugt exakte Ausrichtung der Darmbremseinheit zur Stützeinrichtung der erfindungsgemäßen Füllvorrichtung bewirkt ist. Das Führungsteil dient in einer möglichen Ausführung zugleich als Rücksteller für das Stützteil, da das Führungsteil der Darmbremseinheit bevorzugt mit dem Mitnehmer eines jeweiligen Stützteiles koppelbar ist.

Ein weiterer Aspekt der Erfindung bezieht sich auf eine Stützeinrichtung für zumindest ein Füllrohr einer Vorrichtung zum Füllen von schlauchförmigen Hüllen mit pastöser Masse, insbesondere von Darmraupen mit Wurstbrät, welche sich durch ein Stützteil für das Füllrohr auszeichnet, das in Längsrichtung des Füllrohres im Abstand veränderlich zu einem das Füllrohr drehbeweglich aufnehmenden Aufnahmeteil anordenbar und dazu eingerichtet ist, mit einer gerafften Hülle auf dem Füllrohr zur Aufnahme von Querkräften in Kontakt gebracht zu werden, wobei das Stützteil das vordere Ende der Hülle und damit das mit der gerafften Hülle bestückte Füllrohr am freien Ende während des Verschwenkens seitlich stützt, und wobei die Stützeinrichtung zum Einsatz an einer Vorrichtung zum Füllen von schlauchförmigen Hüllen nach einer der vorstehend beschriebenen bevorzugten Ausführungsformen eingerichtet ist. Mit einer solch erfindungsgemäßen Stützvorrichtung mit ihrem zumindest einen in Längsrichtung des Füllrohres bewegbaren Stützteil ist bevorzugt ein zweiter Lagerpunkt ausgebildet, der insbesondere das freie Ende des Füllrohres abstützt, wenn das Füllrohr über das Aufnahmeteil verschwenkt wird, sodass seitliche Kräfte auf das Füllrohr wirken oder das zweite, freie Ende des Füllrohres beispielsweise mit einer Darm-Beladeeinheit bzw. einer Darmbremseinheit in Kontakt gebracht wird. Beim Verschwenken werden insbesondere Kräfte aufgefangen und die Auslenkung des Füllrohres quer zu seiner Längsachse begrenzt. Beim Inkontaktbringen mit zum Beispiel der Darmbremseinheit oder der Darm-Beladeeinheit übernimmt das Stützteil der Stützeinrichtung eine Ausricht- bzw. Zentrierfunktion an bevorzugt dem freien Ende des Füllrohres.

Die Stützeinrichtung ist bevorzugt starr an einem als Schwenkplatte ausgebildeten Aufnahmeteil einer vorstehend beschriebenen Füllvorrichtung aufnehmbar.

Vorteilhafte Weiterbildungen der erfindungsgemäßen Stützeinrichtung ergeben sich aus den vorstehenden Erläuterungen bzw. obenstehend beschriebenen Weiterbildungen zur erfindungsgemäßen Füllvorrichtung und deren bevorzugten Ausführungsformen. Insoweit wird auf die obenstehenden Ausführungen verwiesen.

Die Erfindung bezieht sich ferner auf eine Füllmaschine zum Herstellen von Würsten aus pastöser Masse, insbesondere aus Wurstbrät, mit wenigstens einem Fülltrichter zum Aufnehmen der pastösen Masse, mit einer Förderpumpe zum Fördern der pastösen Masse und einer Vorrichtung zum Füllen von schlauchförmigen Hüllen mit einer pastösen Masse, insbesondere von Darmraupen mit Wurstbrät nach einer der vorstehend beschriebenen bevorzugten Ausführungsformen, und vorzugsweise mit mindestens einer Darm-Beladeeinheit für geraffte Darmraupen mit zwei relativ zueinander beweglich gehaltenen Greifelementen.

An einer Füllmaschine mit einer derartig erfindungsgemäß ausgebildeten Füllvorrichtung ist durch die verringerte Biegebelastung an den Füllrohren eine verbesserte Prozesssicherheit während der Herstellung der Würstchen bewirkt. Die Stützhülse verhindert das Abknicken der auf das Füllrohr aufgezogenen schlauchförmigen, bevorzugt gerafften Hülle beim Verschwenken des Füllrohres. Zudem ist das Risiko eines Verbiegens der Füllrohre quer zu deren Längsachse während des Aufziehens der schlauchförmigen Hüllen beziehungsweise während des Inkontaktbringens mit einer Darmbremseinheit am offenen Ende eines jeweiligen Füllrohres mit dem bevorzugt entlang des Füllrohres verschiebebeweglich ausgebildeten Stützteil vermieden. Ferner behindert das Stützteil das Schwingen des Füllrohres beim und nach dem Schwenken. Um die Därme an der Füllmaschine zum Aufziehen der Hüllen auf das mindestens eine Füllrohr gleichmäßig greifen zu können, sind die die gerafften Hüllen aufnehmenden Greifelemente vorzugsweise an mindestens einem Hebelelement drehbar gelagert oder über ein Hubgestänge parallel und linear in der Höhe zueinander veränderbar aufgenommen. Vorteilhafte Ausführungsformen der Füllmaschine sind den vorstehenden Ausführungen zur erfindungsgemäßen Füllvorrichtung und deren bevorzugten Ausführungsformen zu entnehmen.

Nachfolgend wird die Erfindung anhand eines möglichen Ausführungsbeispiels unter Bezugnahme auf die nachfolgenden Figuren näher beschrieben. Hierbei zeigen:
- Fig. 1:: eine Vorderansicht einer Maschine zum Füllen schlauchförmiger Hüllen mit einer erfindungsgemäßen Füllvorrichtung;
- Fig. 2:: eine Draufsicht auf die Füllmaschine und die erfindungsgemäße Füllvorrichtung nach Fig. 1;
- Fig. 3:: eine perspektivische Ansicht der erfindungsgemäßen Füllvorrichtung und einer daran angeordneten Darm-Beladeeinheit für schlauchförmige Hüllen, und
- Fig. 4 - 11:: perspektivische Ansichten sowie Schnittdarstellungen der Füllvorrichtungen und ihrer erfindungsgemäßen Stützeinrichtung für die Füllrohre der Füllvorrichtung während der Abfolge der aufeinanderfolgenden Verfahrensschritte.

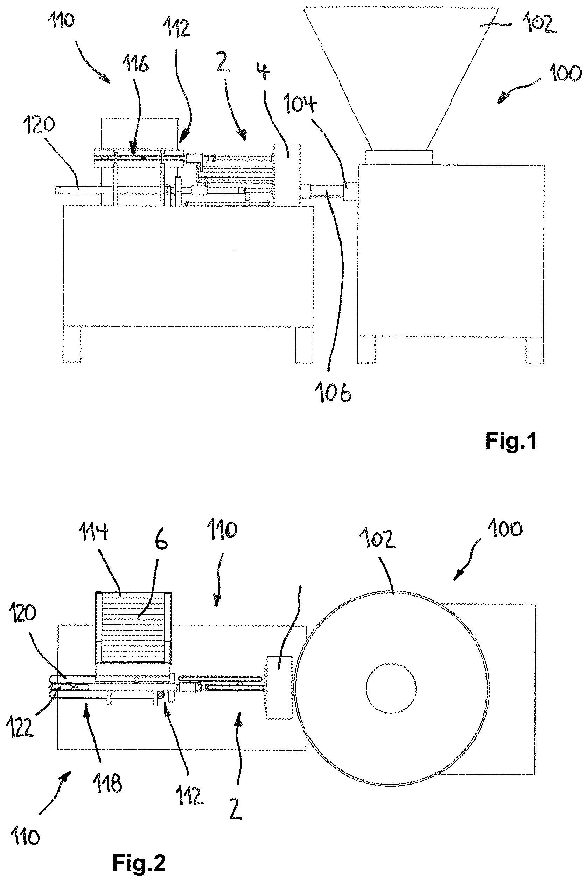

Die Fig. 1 und 2 zeigen eine Maschine 100 zum Füllen schlauchförmiger Hüllen, insbesondere von Kunst- oder Naturdärmen, in Verbindung mit einem Vorsatzgerät 110, an dem eine Füllvorrichtung 2 und eine Darm-Beladeeinheit 112 angeordnet ist. Die Maschine 100 weist ferner einen Fülltrichter 102 und einen Extrusionskopf 104 auf, der über ein Abgaberohr 106 mit einem Abdrehkopf 4 der Füllvorrichtung 2 medienleitend gekoppelt ist. Die Darm-Beladeeinheit 112 umfasst ein Hüllenmagazin 114 für eine Vielzahl geraffter schlauchförmiger Hüllen 6, insbesondere geraffter Kunstdarmhüllen, und eine Hüllengreifeinrichtung 116. Ferner ist am Vorsatzgerät eine Fördereinrichtung 118 mit zwei im Abstand zueinander in einer horizontalen Ebene verlaufenden Förderelementen 120 für die von der Füllvorrichtung 2 hergestellten Würstchen 122 angeordnet.

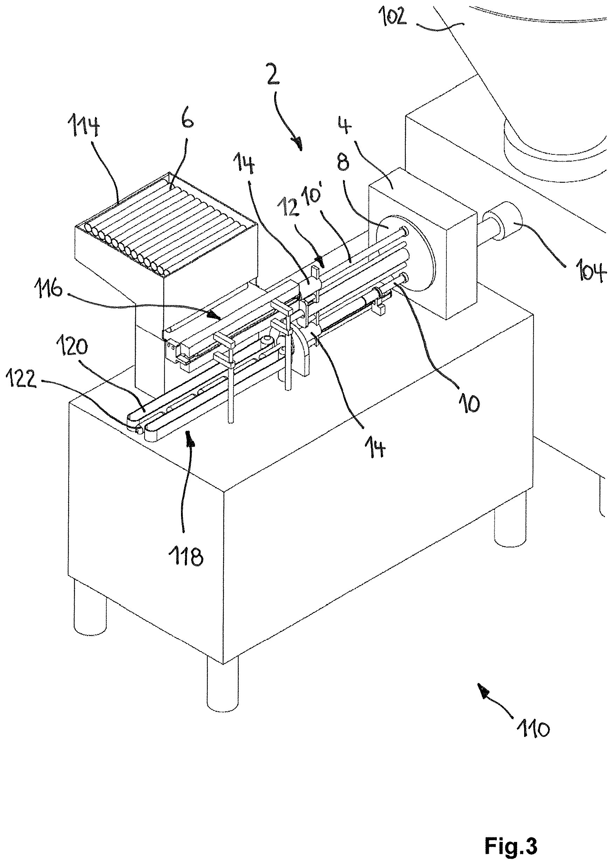

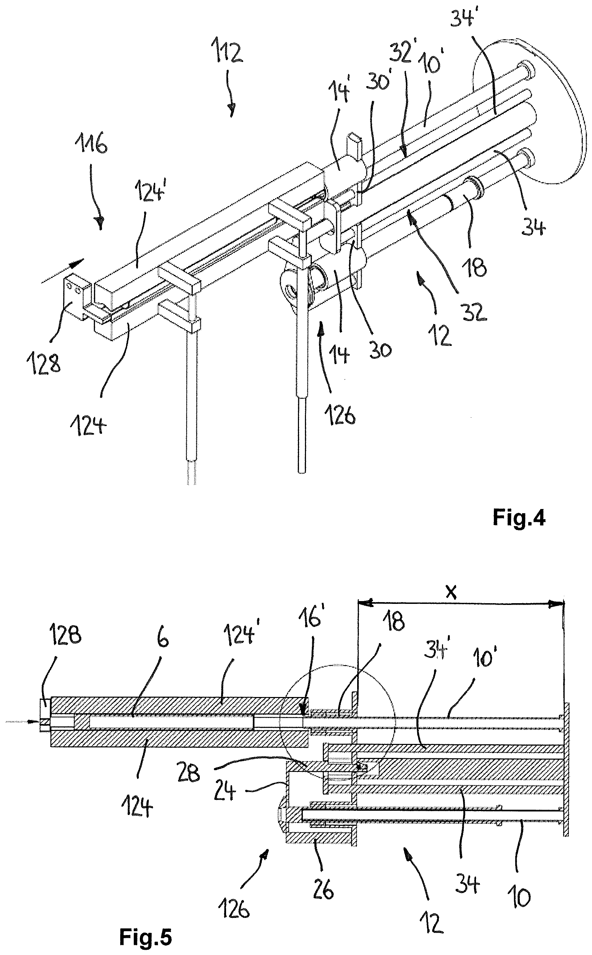

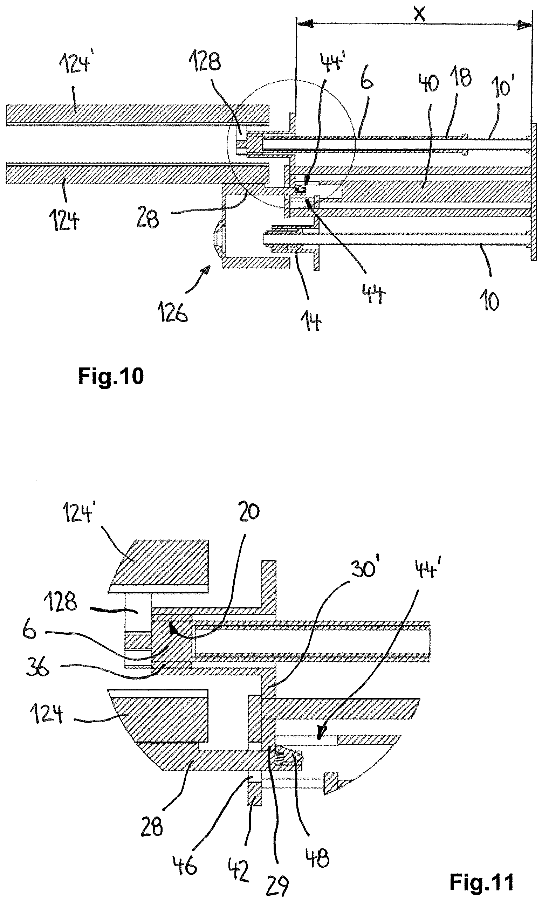

Fig. 3 zeigt das Vorsatzgerät 110 mit seiner Füllvorrichtung 2 zum Füllen der schlauchförmigen Hüllen 6 mittels der vom Extrusionskopf 104 in Richtung des Abdrehkopfes 4 der Füllvorrichtung geförderten pastösen Masse. Der Abdrehkopf 4 weist in der gezeigten Ausführung ein drehbar aufgenommenes Aufnahmeteil 8 für zwei, am Aufnahmeteil 8 angeordnete Füllrohre 10, 10' auf. Das drehbare Aufnahmeteil 8 ist mit einer in der horizontalen Ebene verlaufenden Drehachse ausgebildet. Am Aufnahmeteil 8 ist eine Stützeinrichtung 12 für die Füllrohre angeordnet. Die Stützeinrichtung 12 umfasst für jedes Füllrohr 10, 10' ein im Abstand x (wie in Figs. 4 und 10 verdeutlicht) zum Aufnahmeteil 8 veränderlich aufgenommenes Stützteil 14, 14'. Die Stützteile 14, 14' sind insbesondere zum freien Ende 16, 16' (Fig.5) eines jeweiligen Füllrohres 10, 10' verstellbar gehalten. Mit Hilfe der Stützteile 14, 14' werden die Enden 16, 16' der Füllrohre 10, 10' im Wesentlichen zu ihrer Drehachse gehalten bzw. zentriert. Damit können auf die Füllrohre wirkende seitliche Kräfte, auch bezeichnet als Querkräfte, beim Verschwenken des Aufnahmeteils 8 um seine Drehachse sicher aufgenommen werden. Auch stützen die Stützteile 14, 14', welche in einer Ausführungsform der Erfindung als Stützhülse ausgebildet sind, das vordere Ende einer auf das Füllrohr aufgezogenen Hülle 6 während des Verschwenkens, wodurch das Abknicken der Hüllen während des Schwenkvorganges der Füllrohre vermieden ist.

Die Drehachse des als Schwenkplatte ausgebildeten Aufnahmeteiles 8 und die Drehachsen der Füllrohre 10, 10' verlaufen parallel zueinander. Ferner sind die Drehachsen der Füllrohre 10, 10' gleichmäßig von der Drehachse des Aufnahmeteiles 8 beabstandet angeordnet. Damit ist ein vereinfachter Wechsel der Füllrohre 10, 10' zwischen den verschiedenen Positionen an der Füllvorrichtung 2 möglich. Auf das Füllrohr 10' wird in der oberen Position, der Beladeposition, eine schlauchförmige Hülle 6 aufgezogen, und an dem Füllrohr 10 in der unteren Position, der Befüllposition, erfolgt bevorzugt gleichzeitig das Füllen einer auf dem Füllrohr 10 aufgezogenen schlauchförmigen Hülle 6.

Die Fig. 4 und 5 zeigen eine vergrößerte Teilansicht der Füllvorrichtung 2 und der an der Füllvorrichtung angeordneten Stützeinrichtung 12. Dem in der oberen Position angeordneten Füllrohr 10' ist die Darm-Beladeeinheit 112 mit ihrer Hüllengreifeinrichtung 116 zugeordnet. Die Hüllengreifeinrichtung 116 umfasst zwei relativ zueinander beweglich gehaltene Greifelemente 124, 124', mit denen eine schlauchförmige Hülle 6 von dem nicht näher gezeigten Hüllenmagazin 114 übernommen wird. Die Hülle 6 ist zwischen den Greifelementen 124, 124` zumindest gehalten.

Dem in der Befüllposition angeordneten Füllrohr 10 ist eine Darmbremseinheit 126, auch bezeichnet als Hüllenbremseinheit, zugeordnet, welche insbesondere bewirkt, dass die auf dem Füllrohr 10 aufgezogene Hülle 6 während ihres Befüllens straff gehalten und die Hülle 6 damit kontrolliert vom Füllrohr 10 abgezogen wird.

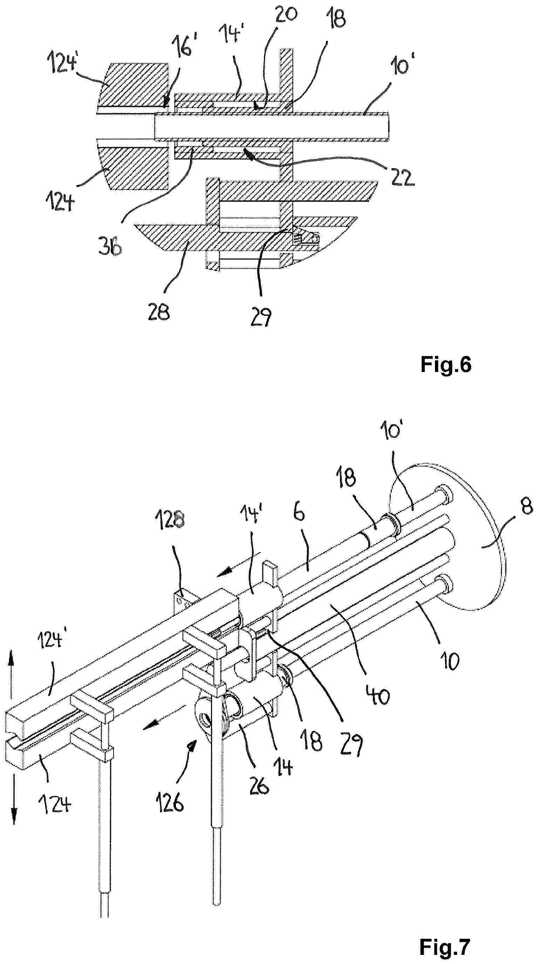

Die Fig. 5 und die in Fig. 6 gezeigte Einzelheit aus Fig. 5 zeigen den Moment kurz vor dem Aufziehen einer über die Hüllengreifeinrichtung 116 aufgenommenen Hülle 6 auf das Füllrohr 10'. Das Füllrohr 10' wird, bevor die Hülle auf das Füllrohr aufgeschoben wird, mit Hilfe des Darmmitnahmeringes 18 über eine Stützfläche 20 am Stützteil 14` zentriert. Die Stützfläche 20 bildet einen zylindrischen Aufnahmeraum 22 am Stützteil 14' aus. Das offene Ende der Hülle 6 ist mit dem im Stützteil aufgenommenen entlang des Füllrohres 10' bewegbaren Darmmitnahmering 18 in Kontakt bringbar, wobei der Darmmitnahmering 18 mit Hilfe der Hülle 6 in Richtung des am Aufnahmeteil 8 bewegbar angeordneten Endes des Füllrohres 10' verschoben wird. Die Darm-Beladeeinheit 112 umfasst einen Schieber 128, der zwischen die Greifelemente 124, 124` einfährt. Über diesen wird die Hülle 6 und zudem der Darmmitnahmering in Richtung des am Aufnahmeteil 8 drehbar angeordneten Endes des Füllrohres 10' geschoben.

Wie Fig. 4 und 5 weiter verdeutlichen ist die Darmbremseinheit 126 in Kontakt mit dem vorderen Ende des Füllrohres 10 in der Befüllposition unten. Ferner ist an der Darmbremseinheit 126 eine Stelleinrichtung 24 für die Stützteile 14, 14' angeordnet, welche die Position der Stützteile 14, 14' entlang der Füllrohre 10, 10' beeinflusst. Die mit der Darmbremseinheit gekoppelte Stelleinrichtung 24 umfasst ein Stellglied 26 zum Verstellen des Stützteiles in Richtung des Aufnahmeteiles 8 für die Füllrohre 10, 10'. In einer Ausführungsform der Erfindung weist die Stelleinrichtung 24 einen Rücksteller 28 auf, der dazu eingerichtet ist, die Stützhülse 12' an dem sich in der oberen Beladeposition befindlichen Füllrohr 10' in Richtung des offenen Endes 16' des Füllrohres zu bewegen, wenn die Hülle aufgezogen ist.

In einer Ausführungsform der Erfindung weisen die Stützteile 14, 14' jeweils einen Mitnehmer 29 auf, der mit einem Abschnitt der Darmbremseinheit 126 oder der Darm-Beladeeinheit 112 koppelbar ist. Darmbremseinheit 126 und/oder Darm-Beladeeinheit weisen dazu eine Stelleinrichtung auf, welche dazu eingerichtet ist, die Stützteile 14, 14' während des Aufziehens einer schlauchförmigen Hülle auf ein jeweiliges Füllrohr 10, 10' und/oder während des Inkontaktbringens mit der Darmbremseinheit 126 in Richtung des Aufnahmeteiles 8 zu bewegen. Die Stelleinrichtung ist in einer weiteren Ausführungsform dazu eingerichtet, die Stützteile 14, 14' nach dem Aufziehen der Hülle auf das Füllrohr 10' in der Beladeposition in Richtung des offenen Endes eines jeweiligen Füllrohres zu bewegen.

Die entlang der Stützeinrichtung 12 beweglich aufgenommenen Stützteile 14, 14' weisen jeweils einen Führungsschlitten 30, 30' auf, welche entlang einer parallel zur Längsachse des Füllrohres ausgerichteten Führung 32, 32' mit die Führungsstreben 34, 34' beweglich sind. An dem Führungsschlitten 30, 30' kann ein mit der Darmbremseinheit 126 oder der Darm-Beladeeinheit 112 koppelbarer Mitnehmer 29 angeordnet sein.

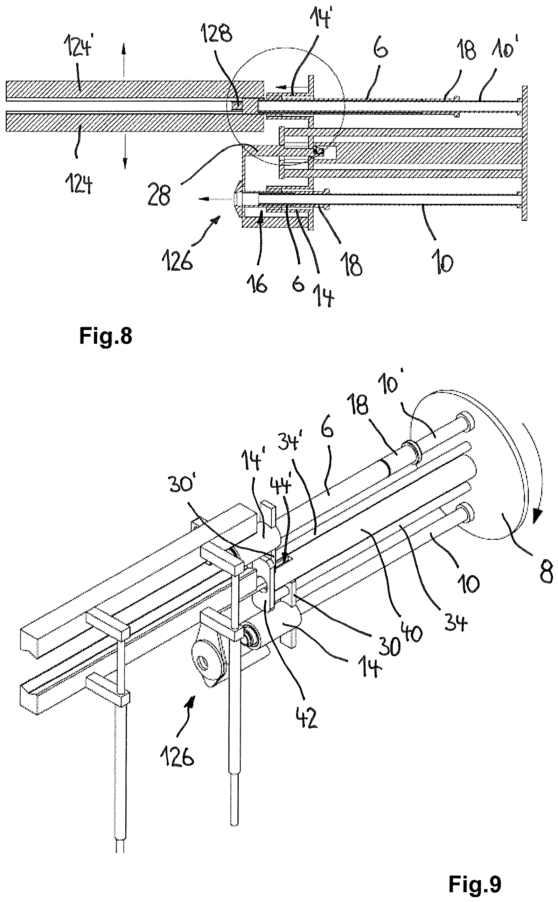

In den Fig. 7 und 8 ist der Moment bzw. Schritt des Beladens gezeigt, in dem der Schieber 128 der Darm-Beladeeinheit 112 die Hülle 6 auf das Füllrohr 10' in der oberen Position an der Füllvorrichtung 2 aufgeschoben hat. Dazu ist der Abstand zwischen den Greifelementen 124, 124` an der Hüllengreifeinrichtung 116 so zu wählen, dass der äußere Umfang der Hülle 6 nicht geklemmt, sondern die Hülle mittels des Schiebers 128 zwischen den Greifelementen bewegt werden kann. Anstelle des Darmmitnahmeringes 18 übernimmt nunmehr die Hülle 6 die Ausricht- bzw. Zentrierfunktion des Füllrohres 10' zur Stützhülse 14`, wobei die Hülle 6 mit einer Stützfläche 20' (Fig. 11) an den jeweils als Stützhülse ausgebildeten Stützteilen 14, 14' in Kontakt steht. Der Schieber 128 verbleibt nach dem Aufschieben der Hülle 6 in der dem freien Ende 16` des Füllrohres 10' angenäherten Position. Weiterhin erfolgt, wie Fig. 7 und 8 verdeutlichen, das Befüllen der Hülle 6 auf dem Füllrohr 10 in der unteren Befüllposition, wobei sich der Darmmitnahmering 18 am Füllrohr 10 in Richtung des vorderen Endes 16 bewegt

Im nachfolgenden Schritt werden, wie durch die Bewegungspfeile in Fig. 7 und 8 angedeutet und den Fig. 9 bis 11 gezeigt, die Greifelemente 124, 124' geöffnet und anschließend die Darmbremseinheit 126 außer Kontakt mit dem Ende 16 des Füllrohres 10 in der unteren Position an der Füllvorrichtung 2 gebracht. Anstatt über die Darmbremseinheit 126 wird das Füllrohr 10 in der unteren Position nunmehr über den an das Ende 16 des Füllrohres 10 bewegten Darmmitnahmering 18 zum Stützteil 14 ausgerichtet. Dieser wurde am Ende des Füllvorganges der auf dem Füllrohr 10 aufgezogenen Hülle 6 in das als Stützhülse ausgebildete Stützteil 14 eingefahren, wobei der Außenumfang des Darmmitnahmeringes 18 mit der Stützfläche 20 am Stützteil 14 in Kontakt steht und eine entsprechende Zentrierfunktion übernimmt. Gleichzeitig mit dem Außerkontaktbringen der Darmbremseinheit am Füllrohr 10 wird das Stützteil 14` am Füllrohr 10' über den Rücksteller 28 des Stelleinrichtung 24 in seine vordere Position, also in Richtung des freien Endes des Füllrohres 10' bewegt.

Wie aus den Fig. 9 bis 11 ersichtlich, verbleibt der Schieber 128 während des Bewegens des Stützteiles 14' in der dem Ende des Füllrohres 10' angenäherten Position. Das Bewegen des Stützteiles 14' erfolgt über den Rücksteller 28 der mit der Darmbremseinheit 126 gekoppelten Stelleinrichtung 24. In der gezeigten Ausführungsform greift der Rücksteller 28 am Führungsschlitten 30' für das Stützteil 14' an. Das Stützteil 14`, das mit einem an den Durchmesser der über das Füllrohr 10' zu schiebenden Hülle 6 angepassten Einsatz 36 ausgerüstet ist, übergreift das vordere Ende der Hülle 6 nach dem Verfahren in seine vordere Position nahezu vollständig.

Jedes Stützteil 14, 14' ist mit seinen Führungsschlitten 30, 30' entlang der Führungsstrebe 34, 34` der Führung 32, 32' verschiebbar aufgenommen. Zudem weist die Stützeinrichtung 12 eine koaxial zur Drehachse des Aufnahmeteiles 8 angeordnete Zentralstrebe 40 auf, zu der die Führungsstreben 34, 34` einer jeweiligen Führung parallel verlaufend angeordnet sind. Die Führungsstreben 34, 34` und die Zentralstrebe 40, die drehfest am Aufnahmeteil 8 des Abdrehkopfes 4 angeordnet sind, sind jeweils endseitig über einen Verbindungsflansch 42 fest miteinander gekoppelt, worüber die Stützeinrichtung 12 eine feste Rahmenstruktur ausbildet. Wie aus der in Fig. 11 dargestellten Einzelheit aus Fig. 10 zu entnehmen, sind in der Zentralstrebe 40 mit den Führungsschlitten 30, 30' korrespondierende Ausnehmungen 44, 44' vorgesehen, in denen Abschnitte der Führungsschlitten bewegbar aufgenommen sind.

Der in einer bevorzugten Ausführungsform an der Darmbremseinheit 126 angeordnete Rücksteller 28 greift über einen im Verbindungsflansch 42 ausgebildeten Durchbruch 46 in die Zentralstrebe 40 ein und wirkt mit dem Mitnehmer 29 eines jeweiligen Führungsschlittens 30, 30' eines Stützteiles 14, 14' zusammen, das in der oberen Beladeposition der Fülleinrichtung steht. Der Rücksteller 28 weist ein mit dem Mitnehmer 29 am Führungsschlitten 30, 30' in Wirkverbindung bringbares federbelastetes Verrastelement 48 auf, das Bereiche des Führungsschlittens hintergreift. Beim Verstellen, insbesondere beim Außereingriffbringen, der Darmbremseinheit 126 mit dem Füllrohr 10 in der Befüllposition wird der Führungsschlitten 30, 30' und das jeweilige Stützteil 14, 14' selbsttätig in die vordere Position bewegt.

Nachdem die Darmbremseinheit 126 vom Füllrohr 10 in der unteren Position getrennt und das Stützteil 14` bis ans vordere Ende des Füllrohres 10' bewegt wurde, wird das Aufnahmeteil 8 des Abdrehkopfes 4 wie durch den in Fig. 9 angedeuteten Bewegungspfeil um 180 Grad gedreht bzw. verschwenkt. Dadurch wird das nunmehr mit der Hülle ausgerüstete Füllrohr 10' in die Befüllposition bewegt und das "leere" Füllrohr 10 in die obere Beladeposition bewegt. Das dann in der Beladeposition befindliche Füllrohr 10 wird nun, wie bei Fig. 4 beginnend, wieder mit einer neuen Hülle 6 bestückt. Das in der unteren Position befindliche Füllrohr 10', insbesondere dessen vorderes Ende 16`, wird mit der Darmbremseinheit 126 in Kontakt gebracht, wobei die Darmbremseinheit auf das Ende 16' des Füllrohres bzw. auf das Ende der Hülle 6 aufgeschoben wird. Gleichzeitig bewegt das an der Darmbremseinheit 126 angeordnete Stellglied 26 beim Verschieben der Darmbremseinheit 126 das Stützteil 14' in seine hintere Position in Richtung des Aufnahmeteiles 8. Damit ist der in Fig. 4 gezeigte Anfangszustand hergestellt und ein neuer Füll- und Bestückvorgang an der Füllvorrichtung 2 kann starten.

Ähnliche oder gleiche Bauteile sind mit demselben Bezugszeichen bezeichnet.

### Bezugszeichenliste:

- 2: Füllvorrichtung
- 4: Abdrehkopf
- 6: Hülle
- 8: Aufnahmeteil
- 10, 10': Füllrohr
- 12: Stützeinrichtung
- 14, 14': Stützteil
- 16, 16`: Ende
- 18: Darmmitnahmering
- 20, 20': Stützfläche
- 22: Aufnahmeraum
- 24: Stelleinrichtung
- 26: Stellglied
- 28: Rücksteller
- 30, 30': Führungsschlitten
- 32, 32': Führung
- 34, 34': Führungsstreben
- 36: Einsatz
- 40: Zentralstrebe
- 42: Verbindungsflansch
- 44: Ausnehmung
- 46: Durchbruch
- 48: Verrastelement
- 100: Maschine
- 102: Fülltrichter
- 104: Extrusionskopf
- 106: Abgaberohr
- 110: Vorsatzgerät
- 112: Darm-Beladeeinheit
- 114: Hüllenmagazin
- 116: Darmgreifeinrichtung
- 118: Fördereinrichtung
- 120: Förderelement
- 122: Würste
- 124, 124`: Greifelement
- 126: Darmbremseinheit
- 128: Schieber

## Patentansprüche

1. Vorrichtung zum Füllen von schlauchförmigen Hüllen, mit einer pastösen Masse, insbesondere von Darmraupen mit Wurstbrät, mit
- zumindest einem Füllrohr (10, 10'), auf das eine mit der Masse befüllbare Hülle (6) aufziehbar ist,
- einem ein erstes Ende des Füllrohrs (10, 10') aufnehmenden Aufnahmeteil (8),
- einer Darmbremseinheit (126), welche dem gegenüberliegenden zweiten, offenen Ende zugeordnet und mit der über das Füllrohr (10, 10') gezogenen Hülle in Wirkverbindung bringbar ist, und
- einer am Aufnahmeteil (8) angeordneten Stützeinrichtung (12) für das Füllrohr (10, 10'),
**dadurch gekennzeichnet, dass** die Stützeinrichtung (12) wenigstens ein im Abstand (x) zum Aufnahmeteil (8) veränderliches Stützteil (14, 14') aufweist, welches dazu eingerichtet ist, mit einer gerafften Hülle auf dem Füllrohr (10, 10') zur Aufnahme von Querkräften in Kontakt gebracht zu werden, wobei das Stützteil (14, 14') das vordere Ende der Hülle (6) und damit das mit der gerafften Hülle (6) bestückte Füllrohr (10, 10') am freien Ende während des Verschwenkens seitlich stützt.

2. Vorrichtung nach Anspruch 1,
**dadurch gekennzeichnet, dass** das Stützteil (14, 14') wenigstens eine die Hülle (6) auf dem Füllrohr (10, 10') zumindest partiell umgebende Stützfläche (20') aufweist.

3. Vorrichtung nach einem der Ansprüche 1 und 2,
**dadurch gekennzeichnet, dass** das Stützteil (14, 14') eine mit dem Außenumfang eines entlang des Füllrohres (10, 10') verfahrbaren Darmmitnahmeringes (18) bereichsweise in Kontakt bringbare Stützfläche (20) aufweist.

4. Vorrichtung nach einem der Ansprüche 1 bis 3,
**dadurch gekennzeichnet, dass** die Stützflächen (20, 20') jeweils einen Aufnahmeraum, vorzugsweise einen zylindrischen Aufnahmeraum (22) für die Hülle (6) und den Darmmitnahmering (18) ausbilden.

5. Vorrichtung nach einem der Ansprüche 1 bis 4,
**dadurch gekennzeichnet, dass** das Stützteil (14, 14') eine Stützhülse mit einer oder mehrere Stützflächen (20, 20') für die geraffte Hülle und/oder den Darmmitnahmering ist.

6. Vorrichtung nach einem der vorstehenden Ansprüche,
**dadurch gekennzeichnet**, das Stützteil (14, 14') einen Zentrierabschnitt für den im Aufnahmeraum abschnittsweise aufnehmbaren Darmmitnahmering (18) aufweist.

7. Vorrichtung nach einem der vorstehenden Ansprüche,
**dadurch gekennzeichnet, dass** das Stützteil (14, 14') einen Führungsschlitten (30, 30') aufweist, welcher entlang einer parallel zur Längsachse des Füllrohres (10, 10') verlaufenden Führung (32, 32') der Stützeinrichtung (12) beweglich ist.

8. Vorrichtung nach einem der vorstehenden Ansprüche,
**dadurch gekennzeichnet, dass** am Stützteil (14, 14') ein Mitnehmer (29) angeordnet ist, mittels dem das Stützteil (14, 14') entlang des Füllrohres (10, 10') bewegbar ist.

9. Vorrichtung nach Anspruch 8,
**dadurch gekennzeichnet, dass** der Mitnehmer (29) mit einem Abschnitt der Darmbremseinheit (126) oder einer Darm-Beladeeinheit (112) koppelbar ist.

10. Vorrichtung nach einem der vorstehenden Ansprüche,
**dadurch gekennzeichnet, dass** das Stützteil (14, 14') während des Verschwenkens des Füllrohres (10, 10') im Bereich des offenen Endes des Füllrohres (10, 10') angeordnet ist.

11. Vorrichtung nach Anspruch 10,
**dadurch gekennzeichnet, dass** das Aufnahmeteil (8) als Abdrehkopf ausgebildet ist, der eine Drehachse aufweist, die vorzugsweise jeweils parallel zur Längsachse des Füllrohres (10, 10') ausgerichtet ist.

12. Vorrichtung nach Anspruch 11,
**dadurch gekennzeichnet, dass** die Stützeinrichtung (12) eine koaxial zur Drehachse des Aufnahmeteils (8) angeordnete Zentralstrebe (40) aufweist, zu der die Führungsstreben (34, 34') einer jeweiligen Führung (32, 32') parallel angeordnet sind.

13. Vorrichtung nach Anspruch 12,
**dadurch gekennzeichnet, dass** am freien Ende der Zentralstrebe (40) ein abschnittsweise entlang der Zentralstrebe bewegliches Führungsteil der Darmbremseinheit (126) angeordnet ist.

14. Stützeinrichtung für zumindest ein Füllrohr (10, 10') einer Vorrichtung zum Füllen von schlauchförmigen Hüllen mit pastöser Masse, insbesondere von Darmraupen mit Wurstbrät,
**gekennzeichnet durch** ein Stützteil (14, 14') für das Füllrohr (10, 10'), das in Längsrichtung des Füllrohres (10, 10') im Abstand (x) veränderlich zu einem das Füllrohr aufnehmenden Aufnahmeteil (8) anordenbar und dazu eingerichtet ist, mit einer auf dem Füllrohr gerafften Hülle zur Aufnahme von Querkräften in Kontakt gebracht zu werden, so dass das Stützteil (14, 14') das vordere Ende der Hülle (6) und damit das mit der gerafften Hülle (6) bestückte Füllrohr (10, 10') am freien Ende während des Verschwenkens seitlich stützt, und wobei die Stützeinrichtung (12) zum Einsatz an einer Vorrichtung zum Füllen von schlauchförmigen Hüllen, nach einem der Ansprüche 1 bis 13, eingerichtet ist.

15. Füllmaschine (100) zum Herstellen von Würstchen aus pastöser Masse, insbesondere aus Wurstbrät,
- mit einem Fülltrichter (102) zum Aufnehmen der pastösen Masse,
- einer Förderpumpe zum Fördern der pastösen Masse, und
- mit einer Vorrichtung (2) zum Füllen von schlauchförmigen Hüllen (6) mit einer pastösen Masse, insbesondere von Darmraupen mit Wurstbrät, nach einem der Ansprüche 1 bis 13,
- und vorzugsweise mit mindestens einer Darm-Beladeeinheit (112) für geraffte Darmraupen mit zwei relativ zueinander beweglich gehaltenen Greifelementen (124, 124').

## Claims

1. Apparatus for filling tubular cases with a pasty material, in particular gathered sausage skin casings with sausagemeat, comprising
- at least one filling tube (10, 10') on to which a case (6) which is to be filled with the material can be pulled,
- a receiving portion (8) receiving a first end of the filling tube (10, 10'),
- a casing braking unit (126) which is associated with the oppositely disposed second open end and which can be brought into operative connected relationship with the case which has been pulled over the filling tube (10, 10'), and
- a support device (12) arranged at the receiving portion (8) for the filling tube (10, 10'),
**characterised in that** the support device (12) has at least one support portion (14, 14') which is variable in spacing (x) relative to the receiving portion (8) and which is adapted to be brought into contact with a gathered case on the filling tube (10, 10') for receiving transverse forces, wherein the support portion (14, 14') laterally supports the front end of the case (6) and thus the filling tube (10, 10') equipped with the gathered case (6) at the free end during pivoting.

2. Apparatus as set forth in claim 1
**characterised in that** the support portion (14, 14') has at least one support surface (20') which at least partially surrounds the case (6) on the filling tube (10, 10').

3. Apparatus as set forth in one of claims 1 and 2
**characterised in that** the support portion (14, 14') has a support surface (20) which can be brought region-wise into contact with the outside periphery of a casing entrainment ring (18) displaceable along the filling tube (10, 10').

4. Apparatus as set forth in one of claims 1 through 3
**characterised in that** the support surfaces (20, 20') respectively form a receiving space, preferably a cylindrical receiving space (22), for the case (6) and the casing entrainment ring (18).

5. Apparatus as set forth in one of claims 1 through 4
**characterised in that** the support portion (14, 14') is a support sleeve with one or more support surfaces (20, 20') for the gathered case and/or the casing entrainment ring.

6. Apparatus as set forth in one of the preceding claims
**characterised in that** the support portion (14, 14') has a centering portion for the casing entrainment ring (18) which can be portion-wise received in the receiving space.

7. Apparatus as set forth in one of the preceding claims
**characterised in that** the support portion (14, 14') has a guide slide (30, 30') moveable along a guide (32, 32') of the support device (12), said guide extending parallel to the longitudinal axis of the filling tube (10, 10').

8. Apparatus as set forth in one of the preceding claims
**characterised in that** arranged on the support portion (14, 14') is an entrainment member (29) by means of which the support portion (14, 14') is moveable along the filling tube (10, 10').

9. Apparatus as set forth in claim 8
**characterised in that** the entrainment member (29) can be coupled to a portion of the casing braking unit (126) or a casing loading unit (112).

10. Apparatus as set forth in one of the preceding claims
**characterised in that** the support portion (14, 14') is disposed in the region of the open end of the filling tube (10, 10') during the pivotal movement of the filling tube (10, 10').

11. Apparatus as set forth in claim 10
**characterised in that** the receiving portion (8) is in the form of a twisting-off head having an axis of rotation which is preferably respectively oriented parallel to the longitudinal axis of the filling tube (10, 10').

12. Apparatus as set forth in claim 11
**characterised in that** the support device (12) has a central strut (40) which is arranged coaxially relative to the axis of rotation of the receiving portion (8) and in relation to which the guide struts (34, 34') of a respective guide (32, 32') are arranged in parallel relationship.

13. Apparatus as set forth in claim 12
**characterised in that** arranged at the free end of the central strut (40) is a guide portion of the casing braking unit (126), which guide portion is moveable portion-wise along the central strut.

14. A support device for at least one filling tube (10, 10') of an apparatus for filling tubular cases with pasty material, in particular gathered sausage skin casings with sausagemeat,
**characterised by** a support portion (14, 14') for the filling tube (10, 10'), which can be arranged variably in the longitudinal direction of the filling tube (10, 10') in the spacing relative to a receiving portion (8) receiving the filling tube and is adapted to be brought into contact with a case gathered on the filling tube for receiving transverse forces, such that the support portion (14, 14') laterally supports the front end of the case (6) and thus the filling tube (10, 10') equipped with the gathered case (6) at the free end during pivoting, and wherein
the support device (12) is adapted for use on an apparatus for filling tubular cases as set forth in one of claims 1 through 13.

15. A filling machine (100) for producing sausages of pasty material, in particular sausagemeat, comprising
- a filling hopper (102) for receiving the pasty material,
- a conveyor pump for conveying the pasty material, and
- an apparatus (2) for filling tubular cases (6) with a pasty material, in particular gathered sausage skin casings with sausagemeat, as set forth in one of claims 1 through 13,
and preferably at least one sausage skin casing loading unit (112) for gathered sausage skin casings with two gripping elements (124, 124') which are held moveably relative to each other.

## Revendications

1. Dispositif de remplissage d'enveloppes tubulaires avec une masse pâteuse, en particulier de boyaux froncés avec de la chair à saucisse, avec
- au moins un tube de remplissage (10, 10'), sur lequel une enveloppe (6) pouvant être remplie de la masse peut être enfilée,
- une partie de réception (8) recevant une première extrémité du tube de remplissage (10, 10'),
- une unité de freinage de boyau (126), laquelle est associée à une deuxième extrémité opposée ouverte et qui peut être amenée en liaison fonctionnelle avec l'enveloppe tirée par-dessus le tube de remplissage (10, 10'), et
- un système de support (12), disposé sur la partie de réception (8), pour le tube de remplissage (10, 10'),
**caractérisé en ce que** le système de support (12) présente au moins une partie de support (14, 14') dont la distance (x) par rapport à la partie de réception (8) peut varier, laquelle est mise au point pour être amenée en contact avec une enveloppe drapée sur le tube de remplissage (10, 10') pour recevoir des forces transversales, dans lequel la partie de support (14, 14') supporte latéralement, pendant le pivotement sur l'extrémité libre, l'extrémité avant de l'enveloppe (6) et ainsi le tube de remplissage (10, 10') équipé de l'enveloppe (6) drapée.

2. Dispositif selon la revendication 1,
**caractérisé en ce que** la partie de support (14, 14') présente au moins une surface de support (20') entourant au moins en partie l'enveloppe (6) sur le tube de remplissage (10, 10').

3. Dispositif selon l'une quelconque des revendications 1 et 2,
**caractérisé en ce que** la partie de support (14, 14') présente une surface de support (20) pouvant être amenée en contact par endroits avec la périphérie extérieure d'une bague d'entraînement de boyau (18) pouvant être déplacée le long du tube de remplissage (10, 10').

4. Dispositif selon l'une quelconque des revendications 1 à 3,
**caractérisé en ce que** les surfaces de support (20, 20') réalisent respectivement un espace de réception, de préférence un espace de réception (22) cylindrique pour l'enveloppe (6) et la bague d'entraînement de boyau (18).

5. Dispositif selon l'une quelconque des revendications 1 à 4,
**caractérisé en ce que** la partie de support (14, 14') est une douille de support avec une ou plusieurs surfaces de support (20, 20') pour l'enveloppe drapée et/ou la bague d'entraînement de boyau.

6. Dispositif selon l'une quelconque des revendications précédentes,
**caractérisé en ce que** la partie de support (14, 14') présente une section de centrage pour la bague d'entraînement de boyau (18) pouvant être reçue par sections dans l'espace de réception.

7. Dispositif selon l'une quelconque des revendications précédentes,
**caractérisé en ce que** la partie de support (14, 14') présente un chariot de guidage (30, 30'), lequel est mobile le long d'une glissière (32, 32'), s'étendant de manière parallèle à l'axe longitudinal du tube de remplissage (10, 10'), du système de support (12).

8. Dispositif selon l'une quelconque des revendications précédentes,
**caractérisé en ce qu'**est disposé sur la partie de support (14, 14') un entraîneur (29), au moyen duquel la partie de support (14, 14') peut être déplacée le long du tube de remplissage (10, 10').

9. Dispositif selon la revendication 8,
**caractérisé en ce que** l'entraîneur (29) peut être couplé à une section de l'unité de freinage de boyau (126) ou à une unité de chargement de boyau (112).

10. Dispositif selon l'une quelconque des revendications précédentes,
**caractérisé en ce que** la partie de support (14, 14') est disposée dans la zone de l'extrémité ouverte du tube de remplissage (10, 10') pendant le pivotement du tube de remplissage (10, 10').

11. Dispositif selon la revendication 10,
**caractérisé en ce que** la partie de réception (8) est réalisée en tant que tête de fermeture par rotation, qui présente un axe de rotation qui est orienté de préférence respectivement de manière parallèle à l'axe longitudinal du tube de remplissage (10, 10').

12. Dispositif selon la revendication 11,
**caractérisé en ce que** le système de support (12) présente une entretoise centrale (40) disposée de manière coaxiale par rapport à l'axe de rotation de la partie de réception (8), par rapport à laquelle les entretoises de guidage (34, 34') d'une glissière (32, 32') respective sont disposées de manière parallèle.

13. Dispositif selon la revendication 12,
**caractérisé en ce qu'**une partie de guidage, mobile par sections le long de l'entretoise centrale, de l'unité de freinage de boyau (126) est disposée sur l'extrémité libre de l'entretoise centrale (40).

14. Système de support pour au moins un tube de remplissage (10, 10') d'un dispositif de remplissage d'enveloppes tubulaires avec de la masse pâteuse, en particulier de boyaux froncés avec de la chair à saucisse,
**caractérisé par** une partie de support (14, 14') pour le tube de remplissage (10, 10'), qui peut être disposée dans le sens longitudinal du tube de remplissage (10, 10') à la distance (x) variable par rapport à une partie de réception (8) recevant le tube de remplissage et est mise au point pour être amenée en contact avec une enveloppe drapée sur le tube de remplissage pour recevoir des forces transversales de sorte que la partie de support (14, 14') supporte latéralement, pendant le pivotement sur l'extrémité libre, l'extrémité avant de l'enveloppe (6) et ainsi le tube de remplissage (10, 10') équipé de l'enveloppe (6) drapée, et dans lequel le système de support (12) est mis au point pour être employé sur un dispositif de remplissage d'enveloppes tubulaires selon l'une quelconque des revendications 1 à 13.

15. Remplisseuse (100) destinée à fabriquer des saucisses à partir d'une masse pâteuse, en particulier à partir de chair à saucisse,
- avec une trémie (102) destinée à recevoir la masse pâteuse,
- une pompe de refoulement destinée à refouler la masse pâteuse, et
- avec un dispositif (2) destiné à remplir des enveloppes (6) tubulaires avec une masse pâteuse, en particulier des boyaux froncés avec de la chair à saucisse selon l'une quelconque des revendications 1 à 13,
- et de préférence avec au moins une unité de chargement de boyau (112) pour des boyaux froncés drapés avec deux éléments de préhension (124, 124') maintenus de manière mobile l'un par rapport à l'autre.
